# EUROPEAN PATENT APPLICATION

(11) **EP 3 782 965 A1**
(43) Date of publication of application: **24.02.2021**
(21) Application number: 19788975.1
(22) Date of filing: 16.04.2019
(51) Int. Cl.: C03C 27/12, B60J 1/00, B60J 7/00, B60J 7/043

(54) **INTERLAYER FILM FOR LAMINATED GLASS, AND LAMINATED GLASS FOR AUTOMOBILE ROOF**

(30) Priority: 16.04.2018 JP 2018078762
(71) Applicant: SEKISUI CHEMICAL CO., LTD., Osaka-shi Osaka 530-8565 (JP)
(72) Inventor: NOHARA, Atsushi, Koka-shi, Shiga 528-8585 (JP); CHOU, Kinryou, Koka-shi, Shiga 528-8585 (JP)
(74) Representative: Ter Meer Steinmeister & Partner
(86) International application number: PCT/JP2019/016290
(87) International publication number: WO 2019/203220

(57) **Abstract**

An interlayer film for laminated glass of the present invention comprises: a resin; a colorant; and a heat shielding material, wherein the interlayer film for laminated glass has a colored region in which a visible light transmittance of a laminated glass is 6% or more and 50% or less, provided that the laminated glass is produced using two clear glass plates having a visible light transmittance of 90.4% in conformity with JIS R 3202: 2011.

## Description

### Technical Field

The present invention relates to an interlayer film for laminated glass, and laminated glass for automobile roof including the interlayer film for laminated glass.

### Background Art

Even if laminated glass is externally shocked and damaged, bits of glass are less likely to be scattered, which is safe, so that the laminated glass is widely used as windshield, side glass, rear glass, and roof glass of vehicles including automobiles, and window glass of aircraft and buildings and the like. A laminated glass including a pair of glasses and an interlayer film for laminated glass containing a resin component such as a polyvinyl acetal resin interposed between the pair of glasses for integrating is widely known.

Recently, glass has been desired to have various performances. From the viewpoint of design properties, privacy protection properties, and light shielding properties, colored laminated glass may be used. As an interlayer film for laminated glass used for the colored laminated glass, the following interlayer film for laminated glass is known. The interlayer film for laminated glass includes a laminate of at least two layers including a first resin layer containing a thermoplastic resin and a colorant and a second resin layer containing a thermoplastic resin and no colorant, and has a visible light transmittance of 5% or less when laminated glass is produced using two clear glasses (see Patent Literatures 1 and 2).

### Citation List

### Patent Literatures

PTL 1: WO 2018/025937
PTL 2: WO 2018/025932

### Summary of Invention

### Technical Problem

Meanwhile, the roof glass of the automobile has an area increasing yearly, and roof glass occupying the area of a most part of a roof is also considered. This is considered to be because an increase in demand to find joy in viewing the scene on the outside of the automobile from the inside of the automobile and improvement in the design technique of the automobile make it possible to use glass having a larger area. In the roof glass, interlayer films having a low visible light transmittance as described in Patent Literatures 1 and 2 are used from the viewpoint of heat shielding in many cases.

However, when the interlayers film for laminated glass described in Patent Literatures 1 and 2 are used, the interlayer films for laminated glass have a low visible light transmittance, which disadvantageously cause insufficient awareness of the scene on the outside of the automobile such as difficult observation of the starry sky from the inside of the automobile, for example. Meanwhile, when the visible light transmittance is simply increased, sunlight may cause the inside of the automobile to be hot more than necessary because of the large area. The light shielding properties are low, which may cause troubles such that a screen of a mobile device such as a smartphone cannot be viewed under the influence of sunlight in a back seat or a front passenger seat.

Then, it is an object of the present invention to provide an interlayer film for laminated glass which has good heat shielding properties and has prescribed light shielding properties while allowing sufficient awareness of a scene on the outside of an automobile.

### Solution to Problem

As a result of intensive studies, the present inventors found that the problems can be solved by blending a colorant and a heat shielding material with an interlayer film for laminated glass so as to provide a prescribed visible light transmittance when incorporated in laminated glass in a case where the interlayer film for laminated glass is sandwiched between two clear glasses, and completed the following present invention. The gist of the present invention is as follows.
[1] An interlayer film for laminated glass comprising: a resin; a colorant; and a heat shielding material,
   the interlayer film for laminated glass having a colored region in which a visible light transmittance of laminated glass is 6% or more and 50% or less, provided that the laminated glass is produced using two clear glass plates having a visible light transmittance of 90.4% in conformity with JIS R 3202: 2011.
[2] The interlayer film for laminated glass according to the above [1], wherein the colorant comprises carbon black.
[3] The interlayer film for laminated glass according to the above [1] or [2], wherein the heat shielding material comprises ITO particles.
[4] The interlayer film for laminated glass according to any one of the above [1] to [3], wherein Tts of the colored region is 60% or less, provided that the laminated glass is produced using two clear glass plates having a visible light transmittance of 90.4% in conformity with JIS R 3202: 2011.
[5] The interlayer film for laminated glass according to any one of the above [1] to [4], wherein an area of the colored region is 50% or more of a total area of the interlayer film for laminated glass.
[6] The interlayer film for laminated glass according to the above [5], wherein the area of the colored region is 80% or more of the total area of the interlayer film for laminated glass.
[7] The interlayer film for laminated glass according to any one of the above [1] to [6], wherein the visible light transmittance of the laminated glass is 20% or less.
[8] The interlayer film for laminated glass according to any one of the above [1] to [7], wherein, in the colored region, a content of the heat shielding material is 0.05 % by mass or more and 0.6% by mass or less and a content of the colorant is 0.002% by mass or more and 0.018% by mass or less.
[9] A laminated glass for automobile roof comprising the interlayer film for laminated glass according to any one of the above [1] to [8].
[10] The laminated glass for automobile roof according to the above [9], wherein the laminated glass for automobile roof has an area of 1 m² or more.

### Advantageous Effects of Invention

The present invention can provide an interlayer film for laminated glass which has good heat shielding properties and has prescribed light shielding properties while allowing sufficient awareness of a scene on the outside of an automobile.

### Description of Embodiments

### <Interlayer film for laminated glass>

Hereinafter, the present invention will be described in detail using embodiments.

An interlayer film for laminated glass of the present invention comprises: a resin; a colorant; and a heat shielding material, wherein the interlayer film for laminated glass has a colored region in which a visible light transmittance of a laminated glass, when the laminated glass is produced using two clear glass plates having a visible light transmittance of 90.4% in conformity with JIS R 3202: 2011 is 6% or more and 50% or less.

When the visible light transmittance in the colored region when incorporated in the laminated glass is less than 6%, the use of the laminated glass for, for example, an automobile roof causes deteriorated visibility when a scene on the outside of an automobile is viewed from the inside of the automobile, which makes it difficult to view the starry sky via the roof from the inside of the automobile, for example. Meanwhile, when the visible light transmittance is higher than 50%, the light shielding properties of the colored region are insufficient and the use of the laminated glass for the automobile roof causes troubles such that a screen of a mobile device such as a smartphone is less likely to be viewed in a front passenger seat or a back seat. The visible light transmittance of higher than 50% makes it difficult to sufficiently improve heat shielding properties even when the heat shielding material is blended, which causes troubles such that the inside of the automobile is hot more than necessary.

The visible light transmittance of the colored region when incorporated in the above laminated glass is preferably 30% or less, more preferably 20% or less, and still more preferably 10% or less. The visible light transmittance of the colored region is set to the upper limit or less, whereby the heat shielding properties are further improved, and excellent light shielding properties are also provided, which provides better visibility and the like of the mobile device in the automobile. The visible light transmittance is preferably 7% or more from the viewpoint of improving the visibility of the scene on the outside of the automobile.

When a laminated glass is produced using two clear glass plates having a visible light transmittance of 90.4% in conformity with JIS R 3202: 2011, Tts of the colored region in the interlayer film for laminated glass of the present invention is preferably 60% or less, more preferably 50% or less, and still more preferably 40% or less. Tts, which is total solar transmittance, is known as an index of the heat shielding properties. Tts having a smaller numerical value means higher heat shielding properties. Therefore, Tts is set to the upper limit or less, whereby the heat shielding properties of the interlayer film for laminated glass are improved. The lower limit of Tts is not particularly limited, but it is preferably 15%, and more preferably 25% from the viewpoint of securing appropriate visibility.

In the present invention, the visible light transmittance and Tts in the above colored region can be adjusted within the above range by adjusting the kind and content of the colorant in the colored region, the kind and blending amount of the heat shielding material, and the thickness of the interlayer film for laminated glass, as described later.

The entire area of the interlayer film for laminated glass of the present invention may be composed of the colored region, but a partial region thereof may be composed of the colored region. That is, the interlayer film for laminated glass of the present invention may have the colored region having the above specific visible light transmittance, and a region having no specific visible light transmittance (hereinafter also referred to as "other region"). The other region is provided adjacent to the colored region in a plane direction (that is, a direction perpendicular to a thickness direction).

In the interlayer film for laminated glass of the present invention, the area of the colored region is preferably 50% or more, more preferably 80% or more, and still more preferably 100%, based on the total area of the interlayer film for laminated glass. The area of the colored region is set to 50% or more, whereby, the interlayer film for laminated glass of the present invention is likely to be practically used in case of applying to the automobile roof and the like.

The arrangement of the other region and colored region is not particularly limited, but the colored region may be provided so as to be surrounded by the other region, or the other region and the colored region may be arranged side by side. In these cases, for example, the other region is preferably strip-shaped. When the other region is strip-shaped, the other region can be provided only in the vicinity of an end part of glass.

Either or both of the other region(s) and the colored region(s) may be plural, and these are alternately arranged. For example, each of two strip-shaped other regions may be provided in each of the end parts, one colored region being disposed so that the colored region is sandwiched between the two other regions.

As described above, the strip-shaped other region is provided in the vicinity of the end part, whereby a central portion of the laminated glass is the colored region, which is likely to exhibit the effects of the present invention.

In the other region, for example, the visible light transmittance is required to be more than 50%, and is preferably 60% or more, and for example, the visible light transmittance is, for example, 99% or less, and preferably 95% or less. In order to increase the visible light transmittance as described above, for example, the content and kind of the colorant to be described later or the other may be adjusted. Specifically, the content (% by mass) of the colorant based on the total amount of the interlayer film for laminated glass in the other region may be less than the content of the colorant in the colored region, or the colorant may not be contained in the other region.

Of course, the other region may have a visible light transmittance of less than 50%, or the other region may contain the colorant and the heat shielding agent and have a visible light transmittance of less than 6%.

Hereinafter, the constitution of the interlayer film for laminated glass in the colored region will be described in detail. In the present invention, the interlayer film for laminated glass contains the resin, the colorant, and the heat shielding material in the colored region.

### (Colorant)

The colorant used in the colored region of the present invention is not particularly limited, and any pigment or dye conventionally blended with the interlayer film for laminated glass may be used. Since the visible light transmittance can be set to be within a predetermined range by a small blending amount of the pigment, the pigment is suitable for the colorant.

Examples of the pigment include phthalocyanine, derivatives of phthalocyanine, anthraquinone, derivatives of anthraquinone, perylene, derivatives of perylene, titanium oxide, derivatives of titanium oxide, azo compounds, and carbon black. Among these, preferred are phthalocyanine, derivatives of phthalocyanine, anthraquinone, derivatives of anthraquinone, perylene, derivatives of perylene, and carbon black because they are highly compatible with the thermoplastic resin and are less likely to bleed out. The colorants may be used alone or in combination of two or more.

Among these, as the colorant, the carbon black is particularly preferably used. The use of the carbon black can provide the color of the laminated glass of the automobile suitable for roof glass and improved heat shielding properties.

### (Heat Shielding Material)

In the interlayer film for laminated glass of the present invention, the heat shielding material is contained in the colored region. The energy amount of an infrared ray with a wavelength of 780 nm or more which is longer than that of visible light is small as compared with an ultraviolet ray. However, the thermal effect of infrared rays is large, and once the infrared rays are absorbed into a substance, heat is released from the substance. As such, the infrared rays are generally called heat rays. The heat shielding material is a material capable of absorbing the infrared rays. The heat shielding material can also scatter and reflect the infrared rays to effectively cut off the infrared rays (heat rays). The colored region of the present invention contains the heat shielding material to provide excellent heat shielding properties.

The heat shielding material generally has a particle shape. Specific examples of the heat shielding material include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles (CWO particles), thallium-doped tungsten oxide particles, rubidium-doped tungsten oxide particles, tin-doped indium oxide particles (ITO particles), tin-doped zinc oxide particles, and silicon-doped zinc oxide particles, and lanthanum hexaboride (LaB6) particles. Heat shielding particles other than these may be used as the heat shielding material. The heat shielding materials may be used alone or in combination of two or more.

Among these, since the heat ray shielding function is high, preferred are metal oxide particles, more preferred are at least one selected from the group consisting of ATO particles, GZO particles, ITO particles, and CWO particles, and still more preferred are ITO particles. Since the ITO particles are less likely to shield infrared stroboscope light and the like emitted by an infrared camera, image photographing can be achieved by the infrared camera via the laminated glass.

Since the heat ray shielding properties can be sufficiently improved, the grating constant of the crystal of the ITO particles is preferably within the range of 10.11 Å to 10.16 Å. Generally, the grating constant of the crystal of the ITO particles is contained within the range of 10.11 Å to 10.16 Å, and the grating constant of the crystal of the ITO particles used in Examples to be described later is also contained within the range of 10.11 Å to 10.16 Å.

The lower limit of the average particle diameter of the heat shielding material is preferably 10 nm, and more preferably 20 nm. The upper limit of the average particle diameter of the heat shielding material is preferably 100 nm, more preferably 80 nm, and still more preferably 50 nm. When the average particle diameter is the above preferable lower limit or more, the heat ray shielding properties can be sufficiently improved. When the average particle diameter is the above preferable upper limit or less, visible light is less likely to be shielded by the heat shielding material, whereby the above visible light transmittance is likely to be adjusted within a predetermined range.

The "average particle diameter" refers to a volume average particle diameter. The average particle diameter can be measured using a particle size distribution measuring apparatus ("UPA-EX150" manufactured by NIKKISO CO., LTD.), or the like.

In the present invention, it is preferable that the content of the heat shielding material based on the total amount of the interlayer film for laminated glass in the colored region is 0.05% by mass or more and 0.6% by mass or less, and the content of the colorant is 0.002% by mass or more and 0.018% by mass or less. By setting the contents of the heat shielding material and colorant to be within these ranges, the visible light transmittance is likely to be adjusted within the above range, whereby prescribed light shielding properties can be secured while excellent visibility of the scene is provided. Tts is also likely to be adjusted within the above desired range, which provides excellent heat shielding properties.

From the viewpoint of providing more excellent heat shielding properties without deteriorating the visibility of the scene, the content of the heat shielding material in the colored region is more preferably 0.12% by mass or more, and still more preferably 0.30% by mass or more. The content of the heat shielding material in the colored region is more preferably 0.55% by mass or less, and still more preferably 0.48% by mass or less.

From the viewpoint of imparting prescribed light shielding properties to the laminated glass and improving heat shielding properties, the content of the colorant in the colored region is more preferably 0.0025% by mass or more, still more preferably 0.0050% by mass or more, and particularly preferably 0.0070% by mass or more. From the viewpoint of providing more excellent visibility, the content of the colorant in the colored region is more preferably 0.015% by mass or less, and particularly preferably 0.010% by mass or less.

In the present invention, from the viewpoint of imparting prescribed light shielding properties to the laminated glass while providing good visibility, and improving heat shielding properties, the above heat shielding material and colorant may be appropriately combined, and the contents of the heat shielding material and colorant in the colored region may be adjusted within the above ranges. Therefore, in the colored region in which the contents of the heat shielding material and colorant are adjusted within the above ranges, it is preferable to use metal oxide particles as the heat shielding material, and to use one or more selected from the group consisting of phthalocyanine, derivatives of phthalocyanine, anthraquinone, derivatives of anthraquinone, perylene, derivatives of perylene, and carbon black as the colorant. It is particularly preferable to use the ITO particles as the heat shielding material, and use carbon black as the colorant.

In the present invention, the pigment and the dye which constitute the colorant may be blended with a resin as-is, but the pigment and the dye may be blended with the resin in a form of ink or toner or the like. In such a case, the content of the colorant means the masses of the pigment and dye themselves.

The heat shielding material and the colorant may be dispersed in a plasticizer, and then blended with a resin. For example, the heat shielding material and the colorant may be added to the plasticizer, a dispersant and the like may be further added thereto to disperse the heat shielding material and the colorant in the plasticizer, and then the dispersed product may be mixed with a resin. Examples of the dispersant to be used include a phosphoric acid ester compound. Examples of the phosphoric acid ester compound include trioctyl phosphate, triisopropyl phosphate, tributoxyethyl phosphate, tricresyl phosphate, and isodecylphenyl phosphate. The blending amount of the phosphoric acid ester compound is, for example, 0.001 to 5 parts by mass based on 100 parts by mass of the resin.

### (Resin)

The interlayer film for laminated glass in the colored region of the present invention contains a resin. The resin is preferably a thermoplastic resin. The interlayer film for laminated glass contains the thermoplastic resin in the colored region, which is likely to serve a function as the adhesion layer, whereby good adhesiveness to a glass plate is provided.

The colorant and the heat shielding material are dispersed in the resin or the mixture of the resin and the plasticizer to be described later in the colored region.

Examples of the thermoplastic resin include, but are not particularly limited to, a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. The use of these resins is likely to secure adhesiveness to the glass plate. In the colored region, each of the thermoplastic resins may be used alone, or two or more of them may be used in combination. Among these, at least one selected from a polyvinyl acetal resin and an ethylene-vinyl acetate copolymer resin is preferable, and a polyvinyl acetal resin is more preferable, from the viewpoint of exhibiting excellent adhesiveness to glass when the polyvinyl acetal resin is used in combination with a plasticizer.

### (Polyvinyl Acetal Resin)

The polyvinyl acetal resin is not particularly limited as long as it is obtained by acetalizing a polyvinyl alcohol with an aldehyde, and a polyvinyl butyral resin is suitable. A preferable lower limit of the acetalization degree of the polyvinyl acetal resin is 40 mol %, and a preferable upper limit thereof is 85 mol %. A more preferable lower limit thereof is 60 mol %, and a more preferable upper limit thereof is 75 mol %.

A preferable lower limit of the amount of hydroxyl groups of the polyvinyl acetal resin is 15 mol %, and a preferable upper limit thereof is 35 mol %. The amount of the hydroxyl groups of 15 mol % or more is likely to provide good adhesiveness to a glass plate and the like, and good penetration resistance of the laminated glass, and the like. The amount of the hydroxyl groups is set to 35 mol % or less, which prevents the laminated glass from being too hard. A more preferable lower limit of the amount of the hydroxyl groups is 25 mol %, and a more preferable upper limit thereof is 33 mol %.

When a polyvinyl butyral resin is used as the polyvinyl acetal resin, from the same viewpoint, a preferable lower limit of the amount of the hydroxyl groups is 15 mol %, and a preferable upper limit thereof is 35 mol %. A more preferable lower limit of the hydroxyl groups is 25 mol %, and a more preferable upper limit thereof is 33 mol %.

The acetalization degree and the amount of the hydroxyl groups can be measured by a method in conformity with JIS K 6728 "Testing methods for polyvinyl butyral".

The polyvinyl acetal resin can be prepared by acetalizing a polyvinyl alcohol with an aldehyde. The polyvinyl alcohol is usually obtained by saponifying a polyvinyl acetate, and a polyvinyl alcohol with a saponification degree of 80 to 99.8 mol % is generally used.

A preferable lower limit of the polymerization degree of the polyvinyl acetal resin is 500, and a preferable upper limit thereof is 4,000. The polymerization degree is set to 500 or more, whereby the laminated glass has good penetration resistance. The polymerization degree is set to 4,000 or less, whereby the laminated glass is likely to be molded. A preferable lower limit of the polymerization degree is 1000, and a preferable upper limit thereof is 3600.

The aldehyde is not particularly limited, and generally, a C1 to C10 aldehyde is suitably used. The C1 to C10 aldehyde is not particularly limited, and examples thereof include n-butyl aldehyde, isobutyl aldehyde, n-valeraldehyde, 2-ethyl butyl aldehyde, n-hexyl aldehyde, n-octyl aldehyde, n-nonyl aldehyde, n-decyl aldehyde, formaldehyde, acetaldehyde, and benzaldehyde. Among these, n-butyl aldehyde, n-hexyl aldehyde, and n-valeraldehyde are preferable, and n-butyl aldehyde is more preferable. Each of these aldehydes may be used alone, or two or more of them may be used in combination.

### (Ethylene-Vinyl Acetate Copolymer Resin)

The ethylene-vinyl acetate copolymer resin may be a non-crosslinked type ethylene-vinyl acetate copolymer resin or a high temperature crosslinked type ethylene-vinyl acetate copolymer resin. There may also be used modified ethylene-vinyl acetate resins such as saponified ethylene-vinyl acetate copolymer and hydrolyzed ethylene vinyl acetate as the ethylene-vinyl acetate copolymer resin.

The ethylene-vinyl acetate copolymer resin preferably has a vinyl acetate content of 10 to 50% by mass, and more preferably 20 to 40% by mass, as measured based on JIS K 6730 "Testing method for ethylene-vinyl acetate resin". The vinyl acetate content is set to be equal to or greater than these lower limits, whereby the adhesiveness to the glass is increased, and the penetration resistance of the laminated glass is likely to be good. The vinyl acetate content is set to be equal to or less than these upper limits, whereby the breaking strength of the interlayer film for laminated glass is increased, which provides good shock resistance of the laminated glass.

### (Ionomer Resin)

The ionomer resin is not particularly limited, and various ionomer resins may be used. Specific examples thereof include an ethylene-based ionomer, a styrene-based ionomer, a perfluorocarbon-based ionomer, a telechelic ionomer, and a polyurethane ionomer. Among these ionomers, an ethylene-based ionomer is preferable from the viewpoints of good mechanical strength, durability, and transparency and the like of the laminated glass, and excellent adhesiveness to glass.

An ionomer of an ethylene-unsaturated carboxylic acid copolymer is suitably used as the ethylene-based ionomer, because of having excellent transparency and high toughness. The ethylene-unsaturated carboxylic acid copolymer is a copolymer containing at least a constitutional unit derived from ethylene and a constitutional unit derived from unsaturated carboxylic acid, and may have a constitutional unit derived from other monomer.

Examples of the unsaturated carboxylic acid include acrylic acid, methacrylic acid, and maleic acid. Acrylic acid and methacrylic acid are preferable, and methacrylic acid is particularly preferable. Examples of the other monomer include an acrylic acid ester, a methacrylic acid ester, and 1-butene.

The ethylene-unsaturated carboxylic acid copolymer preferably contains 75 to 99 mol % of the constitutional unit derived from ethylene, and preferably contains 1 to 25 mol % of the constitutional unit derived from unsaturated carboxylic acid, when all the constitutional units contained in the copolymer is 100 mol %.

The ionomer of the ethylene-unsaturated carboxylic acid copolymer is an ionomer resin obtained by neutralizing or crosslinking at least a part of carboxyl groups contained in the ethylene-unsaturated carboxylic acid copolymer with metal ions. The degree of neutralization of the carboxyl group is usually 1 to 90%, and preferably 5 to 85%.

Examples of an ion source in the ionomer resin include alkaline metals such as lithium, sodium, potassium, rubidium, and cesium, and polyvalent metals such as magnesium, calcium, and zinc. Sodium and zinc are preferable.

A method for manufacturing the ionomer resin is not particularly limited, and the ionomer resin can be manufactured by a conventionally known manufacturing method. For example, when the ionomer of ethylene-unsaturated carboxylic acid copolymer is used as the ionomer resin, for example, ethylene and unsaturated carboxylic acid are subjected to radical copolymerization at elevated temperatures and pressures to manufacture an ethylene-unsaturated carboxylic acid copolymer. Thereafter, the ionomer of ethylene-unsaturated carboxylic acid copolymer can be manufactured by causing the ethylene-unsaturated carboxylic acid copolymer to react with a metallic compound containing the ion source.

### (Polyurethane Resin)

Examples of the polyurethane resin include polyurethane obtained by causing an isocyanate compound to react with a diol compound, and polyurethane obtained by causing an isocyanate compound to react with a diol compound, and a chain extender such as polyamine. The polyurethane resin may contain a sulfur atom. In that case, a part or the whole of the diol may be replaced with one selected from a polythiol and a sulfur-containing polyol. The polyurethane resin can provide good adhesiveness to organic glass. Therefore, when the glass plate is organic glass, the polyurethane resin is suitably used.

### (Thermoplastic Elastomer)

Examples of the thermoplastic elastomer include a styrene-based thermoplastic elastomer and an aliphatic polyolefin. The styrene-based thermoplastic elastomer is not particularly limited, and a known styrene-based thermoplastic elastomer can be used. The styrene-based thermoplastic elastomer generally has a styrene monomer polymer block serving as a hard segment, and a conjugate diene compound polymer block or its hydrogenated block serving as a soft segment. Specific examples of the styrene-based thermoplastic elastomer include a styrene-isoprene diblock copolymer, a styrenebutadiene diblock copolymer, a styrene-isoprene styrene triblock copolymer, a styrene-butadiene/isoprene-styrene triblock copolymer, a styrene-butadienestyrene triblock copolymer, and their hydrogenated products.

The aliphatic polyolefin may be a saturated aliphatic polyolefin, or may be an unsaturated aliphatic polyolefin. The aliphatic polyolefin may be a polyolefin containing a chain olefin as a monomer, or may be a polyolefin containing a cyclic olefin as a monomer. From the viewpoint of effectively improving the preservation stability and sound insulating properties of the interlayer film, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonen, trans-2-nonen, cis-2-nonen, trans-3-nonen, cis-3-nonen, trans-4-nonen, cis-4-nonen, 1-decene, trans-2-decene, cis-2-decene, trans-3-decene, cis-3-decene, trans-4-decene, cis-4-decene, trans-5-decene, cis-5-decene, 4-methyl-1-pentene, and vinyl cyclohexane.

### (Plasticizer)

The interlayer film for laminated glass constituting the colored region may further contain a plasticizer when it contains the thermoplastic resin. When the interlayer film for laminated glass contains the plasticizer, the interlayer film for laminated glass is softened. As a result, the laminated glass is softened. Furthermore, high adhesiveness to the glass plate can also be exhibited. When the polyvinyl acetal resin is used as the thermoplastic resin, containing the plasticizer is particularly effective.

Examples of the plasticizer include organic ester plasticizers such as a monobasic organic acid ester and a polybasic organic acid ester, and phosphate plasticizers such as an organic phosphate plasticizer and an organic phosphite plasticizer. Among these, an organic ester plasticizer is preferable.

Examples of the organic ester plasticizer include triethylene glycol di-2-ethyl butyrate; triethylene glycol di-2-ethylhexanoate; triethylene glycol dicaprylate; triethylene glycol di-n-octanoate; triethylene glycol di-n-heptanoate; tetraethylene glycol di-n-heptanoate; tetraethylene glycol di-2-ethylhexanoate; dibutyl sebacate; dioctyl azelate; dibutyl carbitol adipate; ethylene glycol di-2-ethyl butyrate; 1,3-propylene glycol di-2-ethylbutyrate; 1,4-butylene glycol di-2-ethylbutyrate; 1,2-butylene glycol di-2-ethylbutyrate; diethylene glycol di-2-ethylbutyrate; diethylene glycol di-2-ethylhexanoate; dipropylene glycol di-2-ethylbutyrate; triethylene glycol di-2-ethylpentanoate; tetraethylene glycol di-2-ethylbutyrate; diethylene glycol dicapriate; triethylene glycol di-n-heptanoate; tetraethylene glycol di-n-heptanoate; triethylene glycol di-2-ethyl butyrate; dihexyl adipate; dioctyl adipate; hexylcyclohexyl adipate; diisononyl adipate; heptyl nonyl adipate; dibutyl sebacate; modified sebacic alkyd; mixtures of a phosphoric acid ester and an adipic acid ester; and mixed adipic acid esters. Examples of the mixed adipic acid ester include an adipic acid ester prepared from two or more kinds of alcohols selected from a C4 to C9 alkyl alcohol, and a C4 to C9 cyclic alcohol.

Among these plasticizers, triethylene glycol-di-2-ethylhexanoate (3GO) is particularly suitably used.

In the colored region, the content of the plasticizer is not particularly limited, and a preferable lower limit of the content thereof is 30 parts by mass, and a preferable upper limit thereof is 70 parts by mass, per 100 parts by mass of the thermoplastic resin. When the content of the plasticizer is 30 parts by mass or more, the laminated glass is moderately softened, which provides good handling characteristics and the like. When the content of the plasticizer is 70 parts by mass or less, the plasticizer is prevented from being separated from the interlayer film for laminated glass. A preferable lower limit of the content of the plasticizer is 35 parts by mass, and a preferable upper limit thereof is 63 parts by mass.

The interlayer film for laminated glass contains the resin, or the resin and the plasticizer as a main component in the colored region. The total amount of the thermoplastic resin and the plasticizer is usually 70% by mass or more, preferably 80% by mass or more, and more preferably 90% by mass or more based on the total amount of the interlayer film for laminated glass in the colored region.

### (Other Additives)

The interlayer film for laminated glass in the colored region may further contain additives such as an ultraviolet absorbing agent, an antioxidant, a light stabilizer, an adhesion control agent, a fluorescent whitening agent, and a nucleating agent as necessary.

### (Interlayer film for laminated glass in Other Region)

In the present invention, the interlayer film for laminated glass in the other region may have any aspect, but it is preferable that the interlayer film for laminated glass contains a resin as with the interlayer film for laminated glass in the colored region, and the resin is a thermoplastic resin. The interlayer film for laminated glass in the other region may further contain a plasticizer, or may appropriately contain other additives. The descriptions of the thermoplastic resin, the plasticizer, and the other additives which are used in the other region are the same as those of the thermoplastic resin, the plasticizer, and the other additives in the colored region, and the descriptions thereof will be omitted.

The interlayer film for laminated glass in the other region may appropriately contain at least one selected from the group consisting of the above colorant and heat shielding material as long as it does not have the above specific visible light transmittance.

Furthermore, the interlayer film for laminated glass constituting the other region may have the same constitution as that of the interlayer film for laminated glass constituting the colored region, and further include a colored layer and a shielding layer to set the visible light transmittance of the other region outside the above specific range.

The thickness of the interlayer film for laminated glass is preferably 0.3 mm or more and 1.5 mm or less. In the interlayer film for laminated glass, the kind and content of the colorant, and the kind and blending amount of the heat shielding material are adjusted as described above, and the thickness of the interlayer film for laminated glass is set to be within the range, whereby the visible light transmittance and Tts are likely to be adjusted within the above ranges. From these viewpoints, the thickness of the interlayer film for laminated glass is more preferably 0.5 mm or more and 1.0 mm or less, and still more preferably 0.7 mm or more and 0.9 mm or less.

The interlayer film for laminated glass of the present invention is preferably composed of one layer in at least the colored region. That is, in the laminated glass to be described later, the interlayer film for laminated glass constituting the colored region may be composed of a single layer, and bonded to two glass plates.

When the entire area of the interlayer film for laminated glass is composed of the above colored region, the interlayer film for laminated glass may be molded by, for example, mixing components constituting the interlayer film such as a resin, a heat shielding material, and a colorant, and subjecting the obtained composition to extrusion molding and press molding and the like.

When the colored region and the other region are provided, the interlayer film for laminated glass can be formed by arranging a first resin sheet formed of components constituting the colored region, and a second resin sheet formed of components constituting the other region in a plane direction, for example.

Furthermore, when the colored layer and the shielding layer and the like are provided to form the other region, a resin sheet formed of components constituting the interlayer film such as a resin, a heat shielding material, and a colorant may be produced, followed by laminating a colored layer and a shielding layer and the like on a part of the resin sheet.

### [Laminated Glass]

The laminated glass of the present invention includes the above interlayer film for laminated glass. More specifically, the laminated glass includes two glass plates and the above interlayer film for laminated glass disposed between the two glass plates. In the laminated glass, as described above, the interlayer film for laminated glass is preferably composed of a single layer in at least the colored region. Meanwhile, the interlayer film for laminated glass in the other region may be a multilayer including a colored layer and a shielding layer provided as described above.

### (Glass Plate)

The glass plate used in the laminated glass may be any of inorganic glass and organic glass, and inorganic glass is preferable. Examples of the inorganic glass include, but are not particularly limited to, clear glass, float plate glass, polished plate glass, molded plate glass, meshed plate glass, wired plate glass, and green glass.

As organic glass, one generally referred to as resin glass is used without particular limitation, and examples thereof include organic glass composed of a resin such as polycarbonate, an acrylic resin, an acrylic copolymer resin, or polyester.

The two glass plates may be composed of the same kind of material or different materials. For example, one of the two glass plates may be inorganic glass, and the other may be organic glass. It is preferable that each of the two glass plates is inorganic glass or organic glass.

The thickness of each of the glass plates is not particularly limited, but the thickness is, for example, about 0.1 to 15 mm, and preferably 0.5 to 5 mm. The thickness of each of the glass plates may be the same or different from each other, and is preferably the same.

The laminated glass may be produced by disposing the above-mentioned interlayer film for laminated glass between two glass plates, and subjecting these to pressure bonding and the like for integrating.

The laminated glass of the present invention can be used as a window glass for various vehicles such as automobiles, aircraft, ships, and buildings and the like. The laminated glass is preferably used as a laminated glass for automobile, and particularly preferably used as a laminated glass for automobile roof.

Since the laminated glass of the present invention has prescribed light shielding properties while allowing sufficient awareness of the scene on the outside of the automobile, for example, the starry sky can be observed via the automobile roof when the laminated glass is used for the roof. Meanwhile, the laminated glass is less likely to cause troubles such that a screen of a mobile device is less likely to be viewed by sunlight and the like made incident via the roof. The laminated glass has sufficient heat shielding properties, whereby the sunlight made incident via the roof is prevented from causing the inside of the automobile to be hot more than necessary.

At least a part of the laminated glass for automobile roof may be disposed on the roof. For example, glass disposed over the roof and the rear is also referred to as the laminated glass for automobile roof. The automobile roof is a portion constituting a top panel of a body, and the laminated glass for automobile roof is glass which is generally disposed in a horizontal direction or disposed to be slightly inclined with respect to the horizontal direction (for example, 20° or less). The inclination means the inclination of a straight line linking one end part of glass present at the roof position and the other end part thereof with respect to the horizontal direction.

The laminated glass for automobile roof of the present invention preferably has an area of 1 m² or more, and more preferably 1.5 m² or more. The upper limit of the area of the laminated glass for automobile roof of the present invention depends on the size of the roof, and is practically, for example, 30 m² or less.

In the present invention, when the area of the laminated glass for automobile is set to 1 m² or more, the scene on the outside of the automobile can be observed via glass having a large area, which makes it possible to provide an automobile having excellent recreation properties and openness. Meanwhile, the laminated glass for automobile has sufficient heat shielding properties, whereby the laminated glass for automobile having a large area prevents the inside of the automobile from being hot more than necessary.

### Examples

The present invention will be described in further detail using Examples, but the present invention is in no way limited by these examples.

### (Preparation of Laminated Glass)

For the measurements of the physical properties and the evaluations of an interlayer film for laminated glass, the following laminated glass was produced. The interlayer film for laminated glass obtained in each of Examples and Comparative Examples was held under constant temperature and humidity conditions of 23°C and 28% RH for 4 hours, and then sandwiched between two clear glasses (50 mm long × 65 mm wide × 2.5 mm thick, visible light transmittance: 90.4%, in conformity with JIS R 3202: 2011) to obtain a laminated body. The obtained laminated body was subjected to preliminary pressure bonding using a heating roller at 230°C. The laminated body having subjected to preliminary pressure bonding was subjected to pressure bonding using an autoclave under conditions of 135°C and pressure of 1.2 MPa for 20 minutes, to prepare a laminated glass.

However, when the interlayer film for laminated glass had a colored region and a region other than the colored region, the laminated glass was produced in the same manner except that first and second resin sheets were used in place of the interlayer film for laminated glass, and were arranged along a plane direction between clear glasses.

A visible light transmittance and Tts were measured by the following methods using the laminated glass obtained above, and evaluated by the following evaluation methods.

### (Measurement of Visible Light Transmittance)

The visible light transmittance within a wavelength range of 380 to 780 nm was measured on the laminated glass obtained above using a spectrophotometer ("U-4100" manufactured by Hitachi High-Technologies Corporation) based on JIS R 3106 (1998).

From the measurement of the visible light transmittance, an area ratio of a region having a visible light transmittance of 6% or more and 50% or less in the laminated glass was obtained, and the average value (twenty-point average value) of the visible light transmittances in the region is shown in each of Tables. However, when no region having a visible light transmittance of 6% or more and 50% or less is present, the average value (twenty-point average value) of visible light transmittances of a region having a visible light transmittance of less than 6% or more than 50% is shown in each of Tables.

### (Measurement of Tts)

The transmittance/reflectance within a wavelength range of 300 to 2500 nm was measured on the laminated glass obtained above using a spectrophotometer ("U-4100" manufactured by Hitachi High-Technologies Corporation) based on ISO 13837 to calculate the average value (twenty-point average value) of Tts in the region having a visible light transmittance of 6% or more and 50% or less. The average value is shown in each of Tables. However, when no region having a visible light transmittance of 6% or more and 50% or less is present, Tts was similarly calculated in a region having a visible light transmittance of less than 6% or more than 50%.

### [Evaluation Method]

### (Visibility at Night)

The starry sky was observed by 20 panelists at night (midnight) when the weather was fine via the laminated glass obtained above, to confirm the visibility at night according to the following evaluation criteria.
A: the number of panelists which could view star of the first magnitude: 19 and 20
B: the number of panelists which could view star of the first magnitude: 10 to 18
C: the number of panelists which could view star of the first magnitude: 9 or less

### (Light Shielding Properties)

A smart phone (trade name "i phone 7", manufactured by Apple Computer, Inc.) was horizontally placed on an examining table, and the laminated glass was horizontally disposed at a position 60 cm above the examining table. In the daytime (noon) in fine weather, sunlight was made incident from above the laminated glass. The periphery of the smart phone was shielded from light so that light was made incident only from the laminated glass. The twenty panelists observed the smart phone in a state where a distance between the smart phone and the position of eyes was set to about 40 cm, and the smart phone was looked down at an angle of 60°, and evaluated the light shielding properties of the laminated glass according to the following evaluation criteria.
A: the number of panelists capable of viewing the display contents of a screen: 19 and 20
B: the number of panelists capable of viewing the display contents of a screen: 10 to 18
C: the number of panelists capable of viewing the display contents of a screen: 9 or less

### [Example 1]

40 parts by mass of a plasticizer, 0.21 parts by mass (0.15% by mass based on the total amount of an interlayer film for laminated glass) of a heat shielding material, and 0.0039 parts by mass (0.0028% by mass based on the total amount of the interlayer film for laminated glass) of a colorant, of which kinds are described in Table 1, were mixed, and 0.021 parts by mass of a phosphoric acid ester compound was further added as a dispersant to the mixture, followed by mixing in a horizontal micro bead mill to obtain a mixed solution. Then, 0.1 parts by mass of acetylacetone was added to the mixed solution under stirring to produce a dispersion liquid. The volume average particle diameter of ITO particles in the dispersion liquid was 35 nm.

Next, the total amount of the obtained dispersion liquid was added to 100 parts by mass of a polyvinyl butyral resin (PVB), followed by sufficiently melt-kneading with a mixing roll. The melt-kneaded product was then extruded using an extruder to obtain an interlayer film having a thickness of 0.76 mm.

### [Examples 2 to 9 and 15 to 17]

Examples 2 to 9 and 15 to 17 were carried out in the same manner as in Example 1 except that the blending amount and kind of at least one of a heat shielding material and a colorant were changed so that mass percentages described in Tables 1 to 3 were set based on the total amount of an interlayer film for laminated glass.

### [Example 10]

A first resin sheet having a formulation shown in Table 2 and having a thickness of 0.76 mm was obtained by the same method as that of the interlayer film of Example 1. Example 10 was carried out in the same manner as in the production of the first resin sheet except that a heat shielding material, a colorant, and a dispersant were not blended, to obtain a second resin sheet having a thickness of 0.76 mm.

The first and second resin sheets were arranged in a plane direction, to produce laminated glass according to the above production procedure of the laminated glass, whereby an interlayer film for laminated glass integrated between two clear glasses was provided. A portion composed of the first resin sheet was a colored region, and the area of the colored region was 80% of the total area of the interlayer film for laminated glass. Other region (second resin sheet) had a rectangle frame shape having a prescribed width so that the colored region was surrounded by the other region in all directions.

### [Examples 11 to 14]

Examples 11 to 14 were carried out in the same manner as in Example 10 except that the blending amount of a colorant was adjusted so that a mass percentage described in Table 2 was set based on the total amount of a first resin sheet (colored region), and the area of the colored region with respect to an entire interlayer film for laminated glass was adjusted as described in Table 2.

### [Comparative Example 1]

40 parts by mass of a plasticizer was added to 100 parts by mass of a polyvinyl butyral resin, followed by sufficiently melt-kneading with a mixing roll. The melt-kneaded product was then extruded using an extruder to obtain an interlayer film for laminated glass having a thickness of 0.76 mm.

### [Comparative Example 2]

Comparative Example 2 was carried out in the same manner as in Example 1 except that a colorant was not blended, and the blending amount of a heat shielding material was changed so that a mass percentage described in Table 2 was set based on the total amount of an interlayer film for laminated glass.

### [Comparative Example 3]

Comparative Example 3 was carried out in the same manner as in Example 1 except that a colorant was not blended; the kind of a heat shielding material was changed; and the blending amount of the heat shielding material was changed so that a mass percentage described in Table 2 was set based on the total amount of an interlayer film for laminated glass.

### [Comparative Examples 4 and 5]

Comparative Examples 4 and 5 were carried out in the same manner as in Example 1 except that the blending amounts of a heat shielding material and colorant were changed so that a mass percentage described in Table 2 was set based on the total amount of an interlayer film for laminated glass.

### [Table 1]

**Table 1**

| | | | | Example 1 | Example 2 | Example 3 | Example 4 | Example 5 | Example 6 | Example 7 |
|---|---|---|---|---|---|---|---|---|---|---|
| Constitution | Resin | Kind | - | PVB | PVB | PVB | PVB | PVB | PVB | PVB |
| | | Blending amount | Parts by mass | 100 | 100 | 100 | 100 | 100 | 100 | 100 |
| | Plasticizer | Kind | - | 3GO | 3GO | 3GO | 3GO | 3GO | 3GO | 3GO |
| | | Blending amount | Parts by mass | 40 | 40 | 40 | 40 | 40 | 40 | 40 |
| | Heat shielding material 1 | Kind | - | ITO | ITO | ITO | ITO | ITO | ITO | ITO |
| | | Blending amount | % by mass | 0.15 | 0.15 | 0.15 | 0.45 | 0.45 | 0.45 | 0.53 |
| | Heat shielding material 2 | Kind | - | None | None | None | CWO | CWO | CWO | None |
| | | Blending amount | % by mass | - | - | - | 0.02 | 0.02 | 0.02 | - |
| | Colorant 1 | Kind | - | CB | CB | CB | CB | CB | CB | CB |
| | | Blending amount | % by mass | 0.0028 | 0.0079 | 0.0118 | 0.0028 | 0.0079 | 0.0118 | 0.0028 |
| | Colorant 2 | Kind | - | - | - | - | Phthalocyanine | Phthalocyanine | Phthalocyanine | - |
| | | Blending amount | % by mass | - | - | - | 0.0015 | 0.0015 | 0.0015 | - |
| Physical properties | Colored region, visible light transmittance | | % | 49.8 | 18.4 | 7.4 | 49.5 | 18.3 | 7.3 | 49.6 |
| | Colored region, Tts | | % | 59.8 | 44.2 | 37.0 | 52.2 | 38.5 | 33.5 | 55.1 |
| | Area ratio of colored region | | % | 100 | 100 | 100 | 100 | 100 | 100 | 100 |
| Evaluation | Visibility at night | | - | A | B | B | A | B | B | A |
| | Light shielding properties | | - | B | B | A | B | B | A | B |

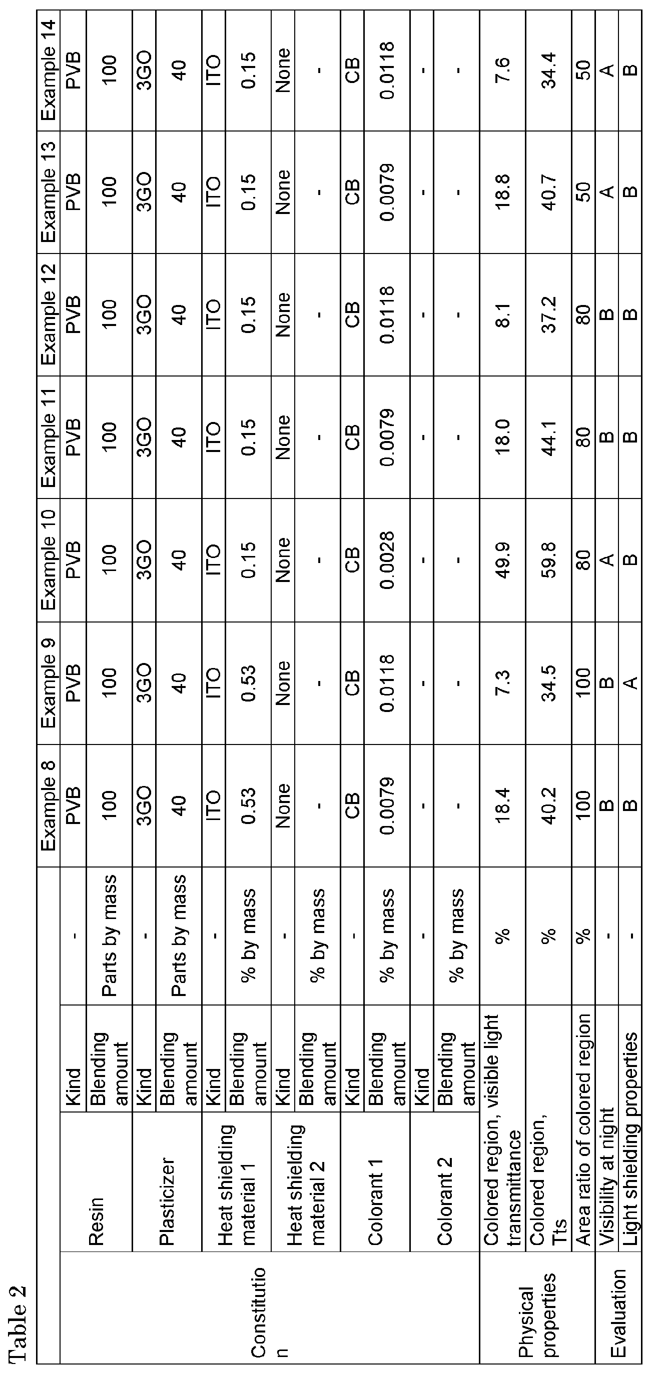

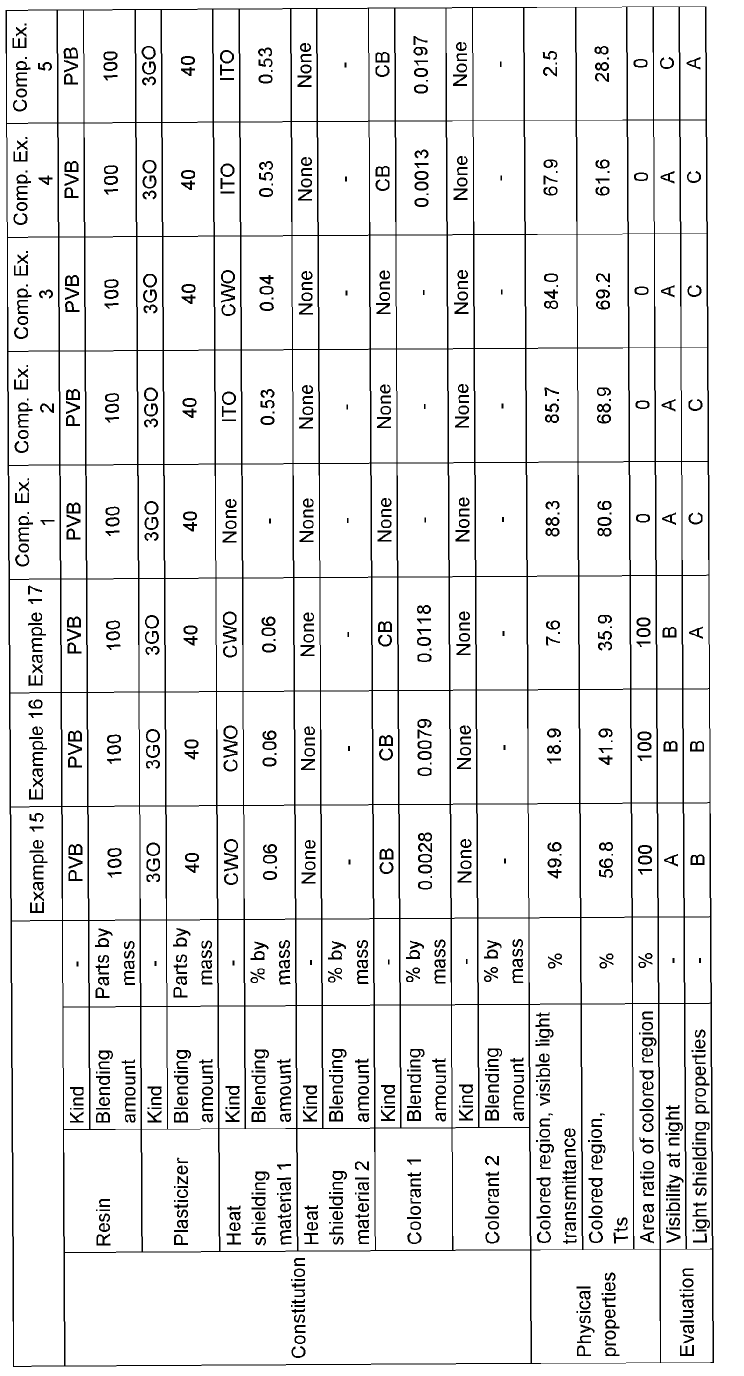

Components used in Examples and Comparative Examples are as follows.

### (1) Resin

PVB: Polyvinyl butyral resin, acetalization degree: 69 mol %, amount of hydroxyl groups: 30 mol %, acetylation degree: 1 mol %, polymerization degree: 1700

### (2) Plasticizer

3GO: Triethylene glycol di-2-ethylhexanoate

### (3) Heat shielding material

ITO: Tin-doped indium oxide particles, average particle diameter: 35 nm
CWO: Cesium-doped tungsten oxide particles, average particle diameter: 50 nm

### (4) Colorant

CB: Carbon black, "FW-200 carbon" manufactured by Orion Engineered Carbons
Phthalocyanine: Vanadium phthalocyanine compound, "NIR-43V" manufactured by Yamada chemical Co., Ltd.

As is apparent from Tables 1 to 3, in Examples 1 to 17, both the colorant and the heat dissipation material were contained, and the colored region having a visible light transmittance set to be within a predetermined range was provided, which provided good visibility of the scene on the outside of the automobile at night and good light shielding properties, whereby the screen of the smart phone could be viewed in the automobile even when sunlight was incident. Furthermore, Tts of the colored region was low, whereby good heat shielding properties could also be provided.

Meanwhile, in Comparative Examples 1 to 3, the colorant or both the colorant and the heat dissipation material were not contained, whereby the visible light transmittance was not set to be within a predetermined range, and the light shielding properties were not good. In Comparative Examples 4 and 5, both the colorant and the heat dissipation material were contained, but the blending amount was not adjusted so that the visible light transmittance was set to be within a predetermined range, so that the light shielding properties and the heat shielding properties were not good, or the visibility of the scene on the outside of the automobile at night was insufficient.

## Claims

1. An interlayer film for laminated glass comprising:
a resin;
a colorant; and
a heat shielding material,
the interlayer film for laminated glass having a colored region in which a visible light transmittance of a laminated glass is 6% or more and 50% or less, provided that the laminated glass is produced using two clear glass plates having a visible light transmittance of 90.4% in conformity with JIS R 3202: 2011.

2. The interlayer film for laminated glass according to claim 1, wherein the colorant comprises carbon black.

3. The interlayer film for laminated glass according to claim 1 or 2, wherein the heat shielding material comprises ITO particles.

4. The interlayer film for laminated glass according to any one of claims 1 to 3, wherein Tts of the colored region is 60% or less, provided that the laminated glass is produced using two clear glass plates having a visible light transmittance of 90.4% in conformity with JIS R 3202: 2011.

5. The interlayer film for laminated glass according to any one of claims 1 to 4, wherein an area of the colored region is 50% or more of a total area of the interlayer film for laminated glass.

6. The interlayer film for laminated glass according to claim 5, wherein the area of the colored region is 80% or more of the total area of the interlayer film for laminated glass.

7. The interlayer film for laminated glass according to any one of claims 1 to 6, wherein the visible light transmittance of the laminated glass is 20% or less.

8. The interlayer film for laminated glass according to any one of claims 1 to 7, wherein, in the colored region, a content of the heat shielding material is 0.05 % by mass or more and 0.6% by mass or less and a content of the colorant is 0.002% by mass or more and 0.018% by mass or less.

9. A laminated glass for automobile roof comprising the interlayer film for laminated glass according to any one of claims 1 to 8.

10. The laminated glass for automobile roof according to claim 9, wherein the laminated glass for automobile roof has an area of 1 m² or more.
